# DEMANDE DE BREVET EUROPEEN

(11) **EP 2 375 519 A1**
(43) Date de publication de la demande: **12.10.2011**
(21) Numéro de dépôt: 11305338.3
(22) Date de dépôt: 28.03.2011
(51) Int. Cl.: H02G 3/06, H02G 15/013, H02G 5/06

(54) **Interface de connexion intégrant un dispositif de positionnement et d'écartement de câbles**

(30) Priorité: 09.04.2010 FR 1052712
(71) Demandeur: Financiere de Beaumont- FDB, 26100 Romans (FR)
(72) Inventeur: COURBIS, Hervé, 26600, BEAUMONT MONTEUX (FR)
(74) Mandataire: Dupuis, François

(57) **Abrégé**

L'interface de connexion intégrant un dispositif de positionnement et d'écartement de câbles (1) du type comprenant un moyen aménagé pour la réception et le guidage de plusieurs câbles, se caractérise en ce que 1' interface de connexion (2) comprend un corps (2-1) cylindrique traversant, et aménagé à l'une (2-2) de ses extrémités avec une partie conique (2.4) pour la réception et le verrouillage du dit dispositif, et en ce que le dispositif comprend une douille (4) autorisant le positionnement d'un noyau profilé (5) permettant le passage et guidage de câbles, le dit noyau coopérant en verrouillage avec la dite douille, et la douille avec le corps de l'interface, et en ce que la douille (4) comprend en partie d'extrémité des languettes (4.4) à capacité élastique de déformation et à pans coniques susceptibles de venir se positionner en regard de la partie conique intérieure (2.4) de l'interface de connexion, et en ce que le dit noyau présentant une partie conique (5.3) qui en insertion dans la douille entraîne le verrouillage en position de la douille par ses languettes dans la partie corps (2a) de l'interface, et en ce que le dit noyau et la dite douille sont aménagés avec des moyens autorisant l'extraction du noyau par rapport à la douille et de la douille par rapport à l'interface de connexion, et en ce que l'autre extrémité de l'interface de connexion est aménagée pour la réception des extrémités de câbles ou leur orientation vers une autre destination.

## Description

L'invention se rattache au secteur technique des dispositifs de raccordement et de positionnement de câbles à l'intérieur de tubes ou conduits métalliques, les câbles devant être sans contact avec le tube récepteur.

Il est connu de disposer une pluralité de câbles à l'intérieur de tubes ou conduits métalliques devant être utilisés dans des applications techniques très spécifiques avec par exemple un environnement ambiant gazeux du type azote. Les applications sont par exemple des alimentations de groupe de puissance immergée.

A cet effet, il est prévu et connu d'intégrer dans le tube des moyens d'écartement et de maintien en position des câbles permettant leur positionnement parallèle entre eux et sans contact avec le tube. Ces moyens écarteurs peuvent être réalisés par exemple sous forme de bague en matériau élastomère muni d'une pluralité de trous de passage des câbles, ces bagues étant insérées et maintenues dans le tube.

La difficulté réside alors dans l'enlèvement de la bague en cas de besoin et une reprise d'effort due au poids des câbles pour préserver les connexions de ceux-ci sur l'interface de connexions. La reprise d'effort induit un risque d'arrachement de la bague constituant une douille. Ainsi la difficulté première est donc de la maintenir en place.

On connaît par le brevet FR 1 249 914 une structure guide-câble pour boîtier répondant à un problème d'étanchéité exclusivement, présentant des composants montés par un système écrou-tubulure fileté protégeant une bague d'étanchéité, à la manière des raccords utilisés pour les tuyaux d'arrosage.

Ce document n'est pas adapté pour répondre aux problèmes d'ancrage des câbles dont la charge peut aller jusqu'à 100 à 150 kg avec des reprises d'effort.

La démarche du Demandeur a donc été de réfléchir à une nouvelle conception des moyens d'écartement et de guidage des câbles dans le tube tout en empêchant tous contacts entre eux et avec la paroi du tube récepteur en permettant un montage et un démontage aisé du dispositif.

La solution apportée par le Demandeur répond de manière simple et pratique à cet objectif.

Selon une première caractéristiques, l'interface de connexion intégrant un dispositif de positionnement et d'écartement de câbles du type comprenant un moyen aménagé pour la réception et le guidage de plusieurs câbles, est remarquable en ce que l' interface de connexion comprend un corps cylindrique traversant, et aménagé à l'une de ses extrémités avec une partie conique pour la réception et le verrouillage du dit dispositif, et en ce que le dispositif comprend une douille autorisant le positionnement d'un noyau profilé permettant le passage et guidage de câbles, le dit noyau coopérant en verrouillage avec la dite douille, et la douille avec le corps de l'interface, et en ce que la douille comprend en partie d'extrémité des languettes à capacité élastique de déformation et à pans coniques susceptibles de venir se positionner en regard de la partie conique intérieure de l'interface de connexion, et en ce que le dit noyau présentant une partie conique qui en insertion dans la douille entraîne le verrouillage en position de la douille par ses languettes dans la partie corps de l'interface, et en ce que le dit noyau et la dite douille sont aménagés avec des moyens autorisant l'extraction du noyau par rapport à la douille et de la douille par rapport à l'interface de connexion, et en ce que l'autre extrémité de l'interface de connexion est aménagée pour la réception des extrémités de câbles ou leur orientation vers une autre destination.

Ces caractéristiques et d'autres encore ressortiront bien de la suite de la description.

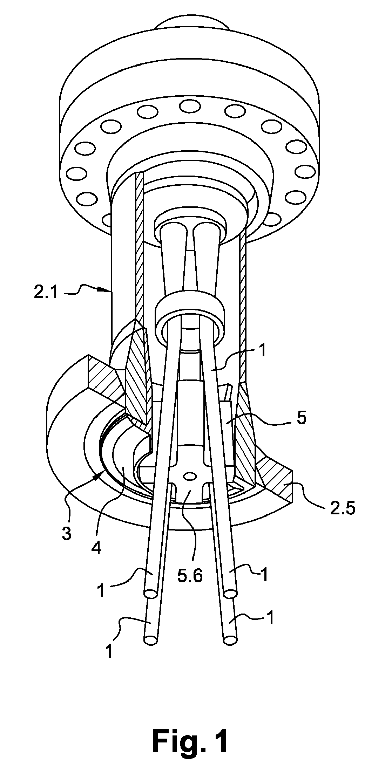

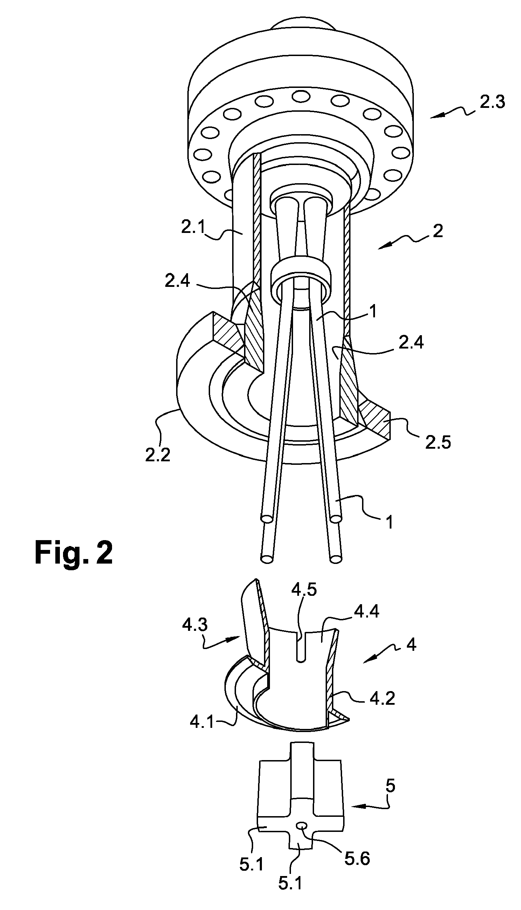

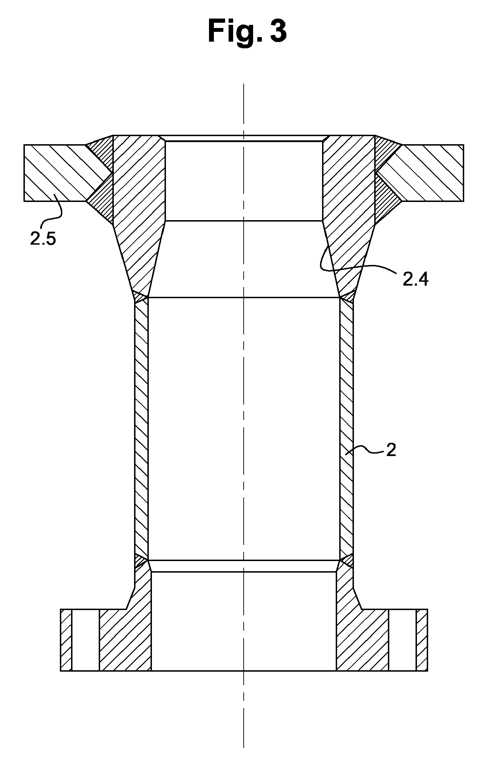

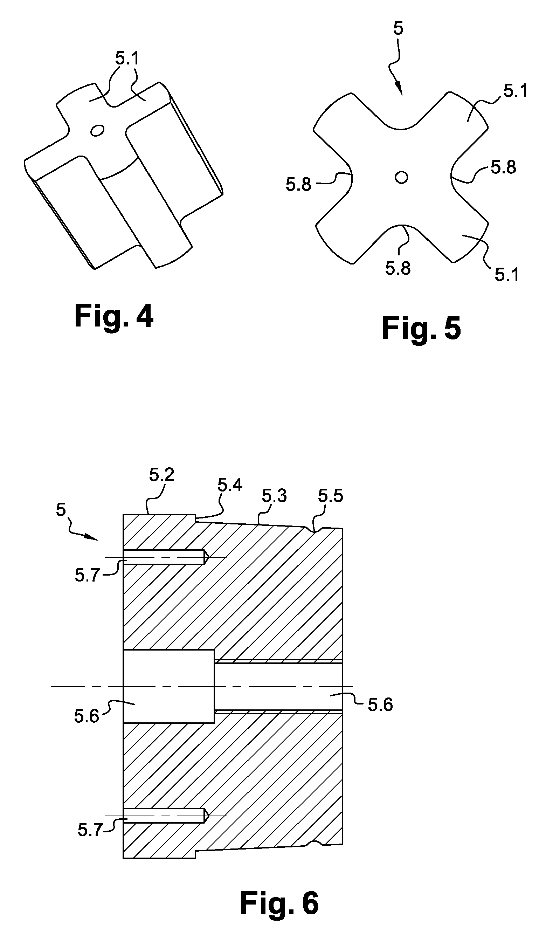

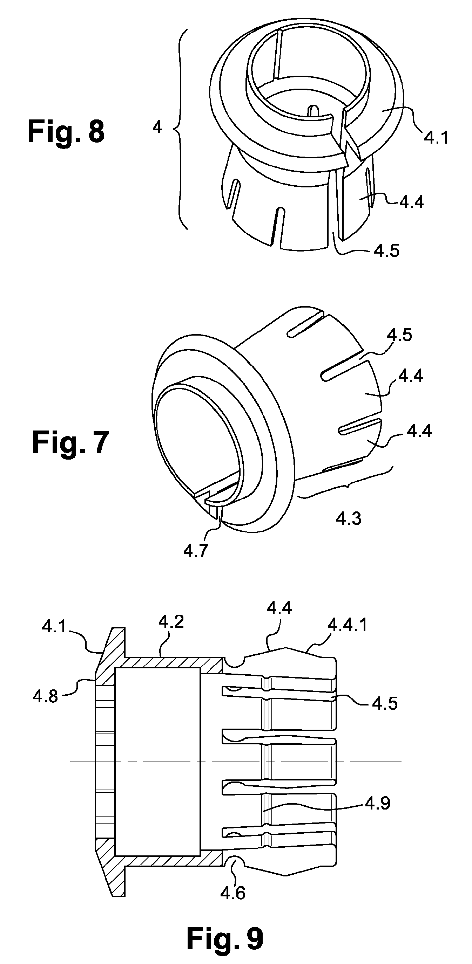

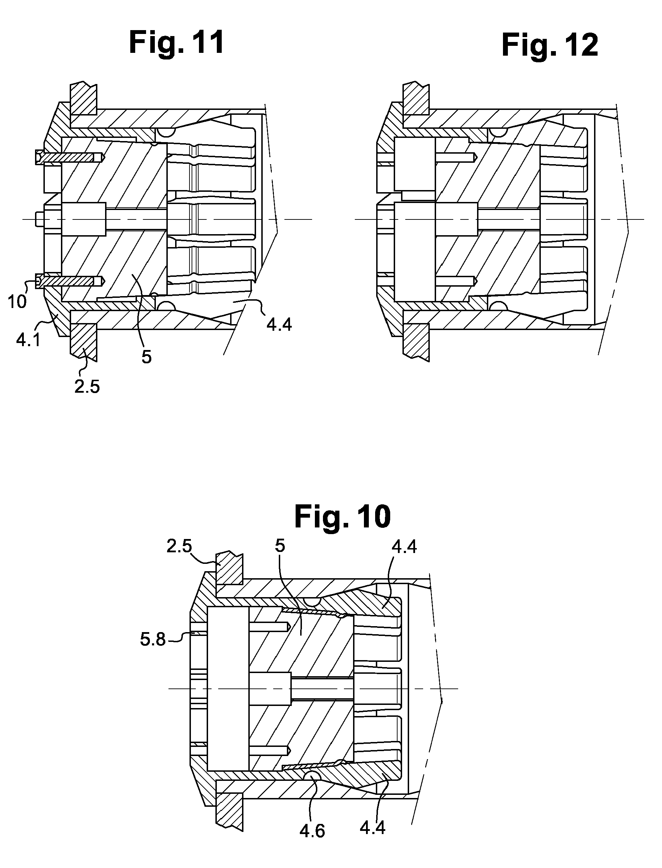

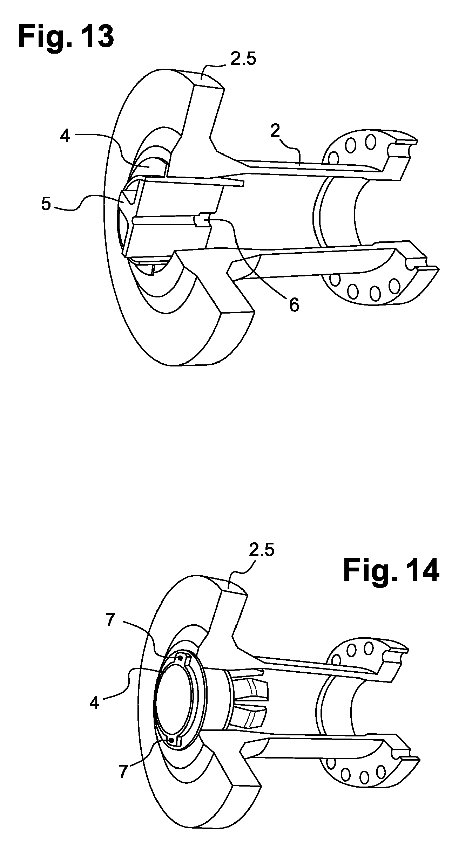

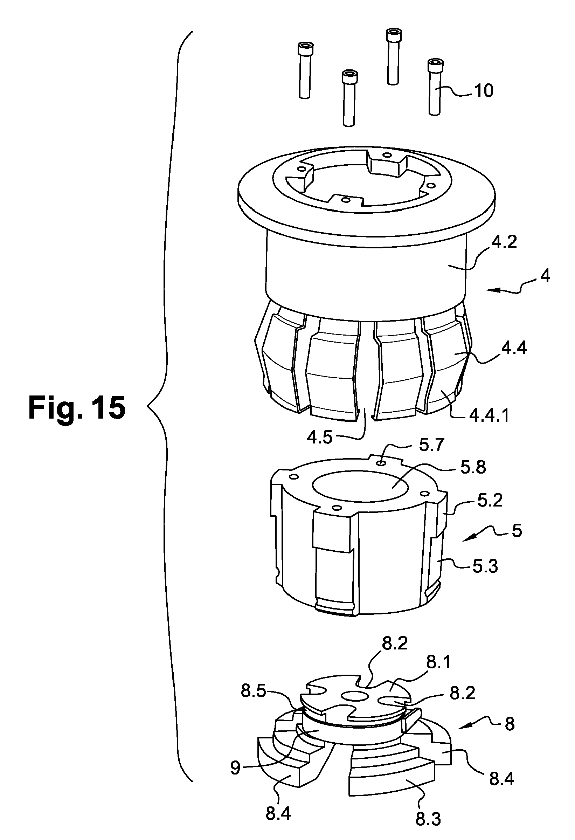

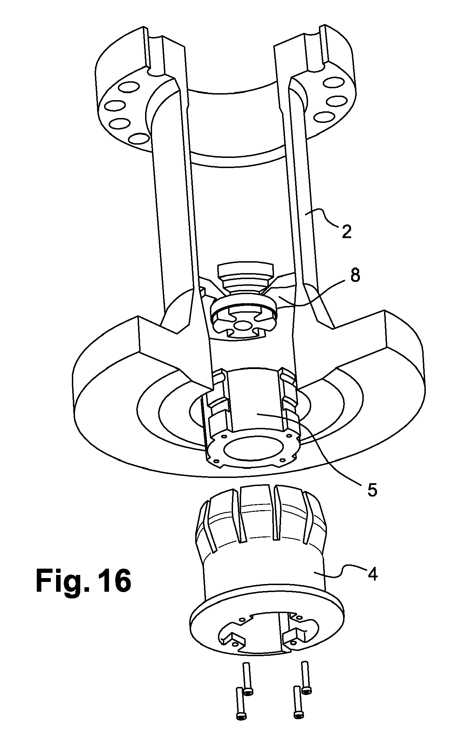

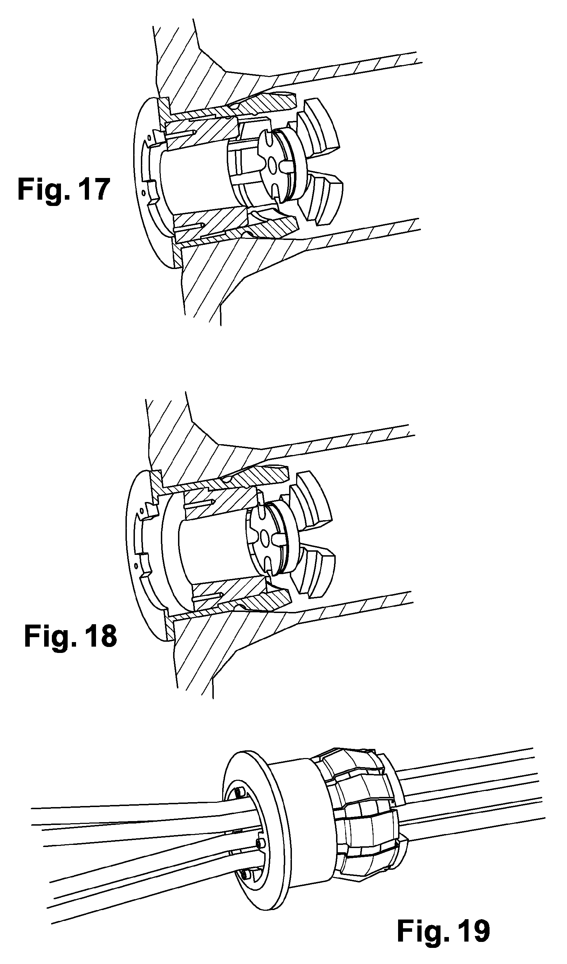

Pour fixer l'objet de l'invention illustrée de manière non limitative aux figures des dessins où :
■ La figure 1 est une vue en perspective avec coupe éclatée illustrant le dispositif selon l'invention disposé à l'intérieur de l'interface de connexion dans une première mise en oeuvre,
■ La figure 2 est une vue en perspective similaire à la figure 1 dans laquelle le dispositif comprenant la douille et le noyau sont présentés avant montage,
■ La figure 3 est une vue en coupe de l'interface de connexion réalisée de manière identique selon les deux mises en oeuvre de l'invention,
■ La figure 4 est une vue en perspective du noyau dans la première mise en oeuvre
■ La figure 5 est une vue de face du noyau selon la figure 4,
■ La figure 6 est une vue en coupe du noyau selon les figures 4 et 5,
■ La figure 7 est une vue en perspective de la douille identique selon les deux mises en oeuvre décrites,
■ La figure 8 est une vue en perspective de dessus de la douille,
■ La figure 9 est une vue selon les figures 7 et 8 de la douille,
■ La figure 10 est une vue en coupe illustrant le montage de la douille et du noyau à l'extrémité avant du corps de l'interface connecteur dans la première mise en oeuvre,
■ Les figures 11 et 12 sont des vues en coupe illustrant le montage du noyau de la douille avant et après verrouillage dans la première mise en oeuvre,
■ La figure 13 est une vue en perspective éclatée illustrant le positionnement de l'insert dans le noyau dans la première mise en oeuvre,
■ La vue 14 est une vue en perspective éclatée illustrant le positionnement des inserts dans la douille dans la première mise en oeuvre,
■ La figure 15 est une vue en perspective éclatée avant montage illustrant selon une autre variante de réalisation la douille, le noyau, et le guide-câble avant montage dans l'interface de connexion,
■ La figure 16 est une vue en perspective et en vue éclatée de l'interface de connexion en présentant le montage de la seconde variante constituée des composants illustrés figure 15,
■ La figure 17 est une vue à grande échelle des composants de la seconde variante de réalisation avant verrouillage en position du noyau par rapport à la douille,
■ La figure 18 est une vue selon la figure 17 après verrouillage du noyau et de la douille en vue du verrouillage de celle-ci par rapport à l'interface de connexion,
■ La figure 19 est une vue des trois composants assemblés selon la seconde variante de réalisation.

Afin de rendre plus concret l'objet de l'invention, on le décrit maintenant d'une manière non limitative illustrée aux figures des dessins.

L'interface de connexion intégrant le dispositif de positionnement et d'écartement de câbles va être décrit ci-après avec une mise en oeuvre de deux variantes de réalisation à partir d'un même principe fonctionnel.

On décrit ci-après les parties communes à ces deux variantes, puis ensuite, leurs spécificités.

Le dispositif de positionnement et d'écartement des câbles (1) est référencé dans son ensemble par (D) et il est intégré dans un interface de connexion (2) comprenant un corps cylindrique (2.1) traversant pour permettre le passage des câbles (1). Ce corps est aménagé à l'une de ces extrémités (2.2) pour la réception et le verrouillage du dispositif (D) selon l'invention. L'autre extrémité (2.3) du corps de l'interface de connexion est aménagée pour la réception et la fixation des extrémités (1.1) des câbles. Le corps (2.1) de l'interface comprend un alésage intérieur présentant côté avant une partie conique (2.4) dont la fonction sera de coopérer par verrouillage avec l'un des constituants du dispositif (D), ce constituant étant une douille profilée dont les caractéristiques seront précisées par la suite. A l'avant de l'interface est prévue une couronne (2.5) pour la fixation de l'interface sur un support approprié, cette couronne étant conformée et rapportée sur le corps de l'interface, ou autrement.

Le dispositif (D) selon l'invention comprend ainsi une douille (4) autorisant le positionnement d'un noyau profilé (5) qui permet le passage de plusieurs câbles (1) dans des positions indépendantes mais parallèles, le noyau et la douille étant aménagés pour coopérer et se verrouiller l'un à l'autre, le dit noyau et la douille étant aménagés chacun respectivement pour la réception de moyens permettant l'extraction du noyau par rapport à la douille et de la douille par rapport au corps de l'interface.

La douille (4) se présente sous la forme d'un corps cylindrique avec successivement de l'avant vers l'arrière une collerette (4.1) transversale d'appui et de positionnement sur la face en regard de l'extrémité avant du corps de l'interface. Cette collerette se prolonge par une portée cylindrique (4.2) puis ensuite par une partie d'extrémité (4.3) constituée d'une pluralité de languettes (4.4) orientées dans le sens longitudinal de la douille et espacées les unes des autres par des fentes (4.5) de séparation permettant de donner une certaine flexibilité. Les languettes ont à leurs extrémités une configuration à pans coniques (4.4.1) pour venir après positionnement et appui en contact avec la partie conique (2.4) formée dans l'alésage du corps de l'interface. En outre, la douille présente entre sa portée lisse (4.2) et sa partie d'extrémité (4.3) une gorge (4.6) constituant un moyen favorisant la flexibilité des languettes. En outre, la douille présente dans son plan longitudinal une fente (4.7) sur toute sa longueur permettant aussi sa flexibilité radiale. La douille présente enfin sur sa face formant collerette des pattes (4.8) munies d'une ouverture pour le passage de vis (8) de liaison et de fixation temporaire du noyau avec la dite douille. Par ailleurs, la partie d'extrémité (4.3) à l'endroit des languettes présente un nervurage périphérique (4.9) permettant un positionnement et fixation par clipsage du noyau sur la douille. La douille présente sur sa collerette des trous borgnes taraudés (7) pour la réception de tiges d'extraction. La douille est réalisée dans un matériau plastique souple du type polyuréthane ou similaire.

La douille autorise le positionnement d'un noyau profilé (5) permettant le passage et le guidage de câbles, le dit noyau coopérant en verrouillage avec la dite douille. Le noyau et la douille sont aménagés avec des moyens autorisant l'extraction du noyau par rapport à la douille. Le noyau permet le passage des dits câbles, lesquels sont ensuite orientés vers l'autre extrémité de l'interface de connexion qui est aménagée pour la réception des extrémités des câbles et/ou pour les orienter vers une autre destination ou poste.

Le noyau (5) peut être agencé selon deux configurations mais avec un aménagement extérieur commun pour coopérer avec la douille. En pratique, le noyau selon les deux configurations en variante est soit aménagé pour assurer dans un premier cas une fonction guide-câble, et soit aménagé en étant traversant la fonction guide-câble étant alors assurée par un autre moyen disposé en aval du noyau du côté de l'autre extrémité de l'interface de connexion.

Dans les deux variantes, le noyau (5) présente une portée cylindrique (5.2) suivie d'une portée conique (5.3) d'une plus grande longueur avec un épaulement de raccordement (5.4) entre elles. Près de l'extrémité de la portée conique (5.3) est prévu un rainurage (5.5) coopérant avec la forme en saillie (4.9) formée sur les languettes de la douille.

Dans la première variante, le noyau (5) qui assure également une fonction guide-câble présente une forme en croisillon à trois ou quatre branches (5-1) en fonction du nombre de câbles à positionner.

Ce noyau comprend intérieurement un alésage épaulé (5.6) dont la partie arrière est susceptible de recevoir un insert (6) taraudé. Cet alésage autorise ainsi l'insertion d'un outillage non représenté utilisé pour permettre après liaison avec l'insert un effort de traction longitudinal pour dégager le noyau de la douille. Le dit noyau présente sur sa face avant des trous (5.7) pour le passage des vis de fixation (10) traversant également la collerette de la douille. Les câbles (1) sont disposés dans les parties de raccordement (5.8) formées entre les branches (5.1) du noyau.

Le nombre de branches formé sur le noyau et la taille de celui-ci dépend du diamètre et du nombre de câbles.

Dans la seconde variante de réalisation du noyau, celui-ci présente un alésage (5.8) le rendant traversant pour le passage de câbles et le noyau en lui-même n'assure pas la fonction guide-câble.

Le noyau est réalisé en un matériau plastique rigide du type nylon pour tenir compte des contraintes d'insertion et d'extraction par rapport à la douille.

Le guide-câble utilisé dans la seconde réalisation est référencé par (8). Il est réalisé en matériau plastique rigide. Ce guide-câble est aménagé comme représenté figure (15) sous forme d'une bague cylindrique avec un moyeu (8-1) présentant des ouvertures de guidage (8-2) établies dans sa longueur pour le positionnement du ou des câbles. Le moyeu (8-1) se prolonge par une collerette (8-3) définissant un nombre de branches (8-4) correspondant aux passages de câbles. Le guide-câble par sa collerette (8-3) est susceptible de venir en appui contre l'extrémité de la douille au niveau des languettes de celle-ci. Le guide-câble comprend en outre une gorge périphérique (8-5) permettant la mise en place d'un anneau fermant (9) à attache rapide pour le maintien des câbles en position. Le guide-câble est ainsi maintenu en position dans l'alésage intérieur de l'interface de connexion.

Il convient dès lors d'exposer le montage du dispositif dans le corps de l'interface de connexion. L'opérateur positionne et introduit la douille à l'intérieur du corps de l'interface. Les languettes de la douille se déforment par élasticité en se rétractant permettant l'insertion. Lorsque la douille est mise en place après placage de sa collerette contre la face avant du corps de l'interface, les languettes de la douille se trouvent être en regard de la portée conique (2.4) intérieure formée dans le corps de l'interface de connexion. Par flexibilité, les languettes reprennent leur position initiale en assurant le contact avec la dite portée conique et assurant ainsi le maintien en position de la douille. On procède ensuite à l'insertion du noyau dans la douille. La mise en place du noyau dans la douille provoque l'expansion de celle-ci au niveau des languettes et assure le verrouillage final du système. On a ainsi représenté ces phases figures 9, 10 et 11 des dessins.

Dans la seconde mise en oeuvre du noyau et guide-câble, le guide-câble est préalablement introduit dans l'interface de connexion et le noyau et la douille sont assemblés dans les mêmes conditions que la première réalisation du noyau.

L'extraction du dispositif représenté figures 13 et 14 s'effectue de la manière suivante : l'insert (6) disposé dans le noyau avec une liaison ferme autorise l'insertion d'une tige filetée et la traction après mise en place d'une liaison entre la tige et l'insert permet le dégagement et l'enlèvement du noyau par rapport à la douille. L'effort de traction sur la tige permet de déclipser le noyau de la douille et donc son enlèvement.

La douille reçoit sur sa face avant les taraudages (7) par surmoulage ou autrement. Ces taraudages permettent à leur tour l'utilisation d'une ou de plusieurs tiges filetées pour effectuer un effort de traction dans le sens longitudinal permettant de dégager la douille par rapport au corps.

Dans le cadre de la seconde variante, la douille et le noyau sont liés entre eux également à l'aide de moyens permettant leur extraction l'une par rapport à l'autre

Le montage en aval sur l'interface de connexion des extrémités des câbles sur la seconde extrémité de l'interface est réalisé de toute manière connue et appropriée

Les avantages ressortent bien de l'invention et on souligne en particulier la simplicité du dispositif et l'aspect pratique de montage et démontage des composants du dispositif.

## Revendications

1. Interface de connexion intégrant un dispositif de positionnement et d'écartement de câbles (1) du type comprenant un moyen aménagé pour la réception et le guidage de plusieurs câbles, **caractérisé en ce que** 1' interface de connexion (2) comprend un corps (2-1) cylindrique traversant, et aménagé à l'une (2-2) de ses extrémités avec une partie conique (2.4) pour la réception et le verrouillage du dit dispositif, et **en ce que** le dispositif comprend une douille (4) autorisant le positionnement d'un noyau profilé (5) permettant le passage et guidage de câbles, le dit noyau coopérant en verrouillage avec la dite douille, et la douille avec le corps de l'interface, et **en ce que** la douille (4) comprend en partie d'extrémité des languettes (4.4) à capacité élastique de déformation et à pans coniques susceptibles de venir se positionner en regard de la partie conique intérieure (2.4) de l'interface de connexion, et **en ce que** le dit noyau présentant une partie conique (5.3) qui en insertion dans la douille entraîne le verrouillage en position de la douille par ses languettes dans la partie corps (2a) de l'interface, et **en ce que** le dit noyau et la dite douille sont aménagés avec des moyens autorisant l'extraction du noyau par rapport à la douille et de la douille par rapport à l'interface de connexion, et **en ce que** l'autre extrémité de l'interface de connexion est aménagée pour la réception des extrémités de câbles ou leur orientation vers une autre destination.

2. Interface de connexion et son dispositif de position et d'écartement des câbles selon la revendication 1, **caractérisé en ce que** le corps (2.1) de l'interface comprend un alésage intérieur présentant côté avant une partie conique (2.4) susceptible de coopérer par verrouillage avec la douille (4), et **en ce que** à l'avant de l'interface est prévue une couronne (3) pour la fixation de l'interface sur un support.

3. Interface de connexion et son dispositif de position et d'écartement des câbles selon les revendications 1 et 2 ensemble, **caractérisé en ce que** la douille (4) comprend un corps cylindrique avec successivement de l'avant vers l'arrière une collerette (4.1) transversale d'appui et de positionnement sur la face en regard de l'extrémité avant du corps de l'interface et **en ce que** la collerette se prolonge par une portée cylindrique (4.2) puis ensuite par une partie d'extrémité (4.3) constituée d'une pluralité de languettes (4.4) orientées dans le sens longitudinal de la douille et espacées les unes des autres par des fentes (4.5) de séparation permettant de donner une certaine flexibilité.

4. Interface de connexion et son dispositif de position et d'écartement des câbles selon la revendication 3, **caractérisé en ce que** les languettes ont à leurs extrémités une configuration à pans coniques (4.4.1) pour venir après positionnement et appui en contact avec la partie conique (2.4) formée dans l'alésage du corps de l'interface assurer le verrouillage de l'ensemble.

5. Interface de connexion et son dispositif de position et d'écartement des câbles selon la revendication 3, **caractérisé en ce que** la douille présente entre sa portée lisse (4.2) et sa partie d'extrémité (4.3) une gorge (4.6) constituant un moyen favorisant la flexibilité des languettes et **en ce que** la douille présente dans son plan longitudinal une fente (4.7) sur toute sa longueur permettant aussi sa flexibilité radiale

6. Interface de connexion et son dispositif de position et d'écartement des câbles selon la revendication 3, **caractérisé en ce que** la douille présente sur sa face formant collerette des pattes (4.8) munies d'une ouverture pour le passage de vis (10) de liaison et de fixation temporaire du noyau avec la dite douille, et **en ce que** la partie d'extrémité (4.3) à l'endroit des languettes présente un nervurage périphérique (4.9) permettant un positionnement et fixation par clipsage du noyau sur la douille.

7. Interface de connexion et son dispositif de position et d'écartement des câbles selon la revendication 3, **caractérisé en ce que** la douille présente sur sa collerette des trous borgnes taraudés (7) pour la réception de tiges d'extraction.

8. Interface de connexion et son dispositif de position et d'écartement des câbles selon la revendication 1, **caractérisé en ce que** le noyau (5) présente une portée cylindrique (5.2) suivie d'une portée conique (5.3) d'une plus grande longueur avec un épaulement de raccordement (5.4) entre elles et **en ce que** le noyau présente près de l'extrémité de la portée conique (5.3) un rainurage (5.5) coopérant avec la forme en saillie (4.9) formée sur les languettes de la douille.

9. Interface de connexion et son dispositif de position et d'écartement des câbles selon la revendication 8, **caractérisé en ce que** le noyau est agencé en étant traversant pour le passage des câbles et **en ce qu'**un guide-câble rapporté (8) disposé en aval du dit noyau assure le guidage des câbles.

10. Dispositif selon la revendication 8 **caractérisé en ce que** le noyau (5) présente une forme en croisillon à plusieurs branches (5.1) pour assurer la fonction guide-câble, et **en ce que** le dit noyau présente sur sa face avant des trous (5.7) pour le passage des vis de fixation (8) traversant également la collerette de la douille.

11. Interface de connexion et son dispositif de position et d'écartement des câbles selon la revendication 9, **caractérisé en ce que** le noyau comprend intérieurement un alésage épaulé (5.6) dont la partie arrière est susceptible de recevoir un insert (6) taraudé, et **en ce que** le dit alésage autorise ainsi l'insertion d'un outillage utilisée pour permettre après liaison avec l'insert un effort de traction longitudinal pour dégager le noyau de la douille.

12. Interface de connexion et son dispositif de position et d'écartement des câbles selon la revendication 9, **caractérisé en ce que** le guide-câble (8) est aménagé sous forme d'une bague cylindrique avec un moyeu (8-1) présentant des ouvertures de guidage (8-2) établies dans sa longueur pour le positionnement du ou des câbles, et **en ce que** le moyeu (8-1) se prolonge par une collerette (8-3) définissant un nombre de branches (6-4) correspondant aux passages de câbles, et **en ce que** le guide-câble par sa collerette (8-3) est susceptible de venir en appui contre l'extrémité de la douille au niveau des languettes de celle-ci, et ce que le guide-câble est ainsi maintenu en position dans l'alésage intérieur de l'interface de connexion.

13. Interface de connexion et son dispositif de position et d'écartement des câbles selon la revendication 12, **caractérisé en ce que** le guide-câble comprend en outre une gorge périphérique (8-5) permettant la mise en place d'un anneau fermant (9) à attache rapide pour le maintien des câbles en position.
